(19) Europäisches Patentamt
European Patent Office
Office européen des brevets

(11) **EP 3 519 185 B1**

(12) **EUROPEAN PATENT SPECIFICATION**

(45) Date of publication and mention of the grant of the patent:
**04.08.2021 Bulletin 2021/31**

(51) Int Cl.:
*B32B 27/08* (2006.01)          *B32B 27/32* (2006.01)
*C08J 5/18* (2006.01)          *B32B 7/12* (2006.01)
*B32B 27/30* (2006.01)          *B32B 27/34* (2006.01)
*C08K 5/00* (2006.01)

(21) Application number: **17785075.7**

(22) Date of filing: **27.09.2017**

(86) International application number:
**PCT/US2017/053697**

(87) International publication number:
**WO 2018/064155 (05.04.2018 Gazette 2018/14)**

(54) **POLYOLEFIN BASED STRETCHED FILMS INCORPORATING MECHANOCHROMIC DYES AND METHOD TO USE SAME**

POLYOLEFINBASIERTE STRETCHFOLIEN MIT MECHANOCHROMISCHEN FARBSTOFFEN UND VERFAHREN ZU DEREN VERWENDUNG

FILMS ÉTIRÉS À BASE DE POLYOLÉFINES INCORPORANT DES COLORANTS MÉCANOCHROMIQUES ET LEUR PROCÉDÉ D'UTILISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.09.2016 US 201662402396 P**

(43) Date of publication of application:
**07.08.2019 Bulletin 2019/32**

(73) Proprietor: **Dow Global Technologies LLC Midland, MI 48674 (US)**

(72) Inventors:
• **ALABOSON, Justice**
  **Freeport**
  **TX 77541 (US)**
• **SHAH, Viraj**
  **Lake Jackson**
  **TX 77566 (US)**
• **HOBSON, Jon W.**
  **Freeport**
  **TX 77541 (US)**
• **SERRAT, Cristina**
  **Freeport**
  **TX 77541 (US)**

(74) Representative: **Boult Wade Tennant LLP Salisbury Square House 8 Salisbury Square London EC4Y 8AP (GB)**

(56) References cited:
**WO-A2-2011/056791      US-A1- 2014 013 864**

• **ANDREA PUCCI ET AL: "Dichroic Properties of Bis(benzoxazolyl)stilbene and Bis(benzoxazolyl)thiophene Dispersed into Oriented Polyethylene Films: A Combined Experimental and Density Functional Theory Approach", JOURNAL OF PHYSICAL CHEMISTRY PART B: CONDENSED MATTER, MATERIALS, SURFACES, INTERFACES & BIOPHYSICAL, vol. 110, no. 7, 1 February 2006 (2006-02-01), pages 3127-3134, XP055422654, US ISSN: 1520-6106, DOI: 10.1021/jp056325p**

**Description**

Field of the Invention

The present invention relates to having a practical indication of the film tension applied to a unitized load, and therefore of its integrity during transportation, by using a stretch film incorporating mechanochromic dyes. The dye allows a color change to be observed upon different levels of elongation of the film, thereby providing a visual indication to help ensure the optimum level of stretch is being used when using the stretch film for securing product.

Background and Summary

Stretch films or stretch wrap, are highly stretchable plastic films that are wrapped around items in order to protect the item and/or in order to bundle smaller items into one larger unit. The stretch films provide a film around one or more products in order to stabilize, protect and help secure the cargo from tampering or theft. Typically stretch films are made of polyolefin materials such as linear low density polyethylene ("LLDPE") low density polyethylene ("LDPE"), ethylene vinyl acetate copolymers ("EVA") or polypropylene ("PP"), due to their balance of properties including elasticity.

These stretch films are frequently used to unitize pallet loads but also may be used for bundling smaller items. In practice, machine stretch films are elongated to 250-350% as they are wrapped around the goods and the elastic recovery of the stretch films keeps the items tightly bound. As such elongation levels are difficult to achieve by hand, most films intended for handwrapping are preoriented. Pre-oreintation involves using a machine to stretch the film to about 250% to 300% elongation, while creating another roll of film (the pre-oriented roll). This new pre-oriented roll has some level of stretchability left in it, typically on the order of 15 to 30 % further elongation. A person using the pre-oriented roll for hand wrapping would only need to stretch the film by this additional amount in order to achieve a good holding force.

Whether machine wrapping or hand wrapping a load, the elongation should be optimized, as if the film is not elongated sufficiently, the film may slough off of the package or the goods may shift and break free during transportation, whereas if the elongation is too high, the goods may become damaged from the pressure imparted by the film and/or increased rates of film breakage will be observed. Unoptimized stretching is more common when handwrapping a load, due to the variability of human users. However, automatic equipment is costly, requires more space, and is not well suited to non-uniform loads, and so is not universally used. Therefore, manually stretched films currently account for approximately 35% and 50% of the total stretch film market in North America and Europe respectively.

Multilayer stretch films allow different functionality to be imparted to the films than would be obtainable using mono-layer films. For example, cling layers, barrier layers, and/or layers with specific physical properties such as puncture/tear/abuse resistance may be combined with layers formulated for their elastic properties to provide superior films. These multilayer films tend to be more expensive, however, heightening the importance of avoiding waste. WO9414609 discloses a multi-layer co-extruded polyolefin stretch wrap film.

The present disclosure helps to address the lack of standardization (particularly in manual pallet wrapping) by providing a feature in the stretch film that actively interacts with the operator during the application process to provide a visual indication as to the level of elongation. This visual indication can be achieved through the use of a mechanochromic dye. The film can be tailored to maximize the visual indication at the desired elongation.

Accordingly, in one aspect, the present disclosure relates to a multilayer stretch film comprising a. at least a first layer, wherein said first layer comprises a polyolefin resin; b. at least a second layer, wherein the second layer comprises one or more different polymers; and c. a mechanochromic dye in an amount of from 0.0001 to 1 percent by weight of the multilayer stretch film, wherein the mechanochromic dye is in any or all layers of the film; wherein the multilayer stretch film has an elongation in the machine direction of at least 300%, as determined by ASTM D882, and an elongation in the cross direction of at least 400%, as determined by ASTM D882, prior to any pre-orientation; and wherein the first layer and the second layer each have a non-preoriented thickness in the range of from 5 to 200 μm.

Another aspect of the disclosure is a method of optimizing load retention per amount of film used, by promoting optimal stretching of stretch film during a wrapping operation, comprising the steps of: a. selecting a polyolefin resin having a given density; b. selecting a mechanochromic dye capable of agglomeration in an unstretched film made from the polyolefin resin having the given density, such that the unstretched film will exhibit a first color; c. admixing the mechanochromic dye into a melt of the polyolefin resin; d. forming a film from the admixture of step c; and e. wrapping an object using the film of step d, while stretching the film to a level where a change from the first color to a second color can be observed.

In a preferred embodiment of the method as defined above, the choice of dye, the amount of dye added, the choice of the polyolefin resin, and film structure are selected so that the color change indicates elongation in the range of from 200 to 300 percent elongation, as determined by ASTM D882.

In a preferred embodiment of the method as defined above, it further comprises the step of pre-orienting the film formed in step d, prior to stretching the film in step e.

In a preferred embodiment of the method as defined above, the mechanochromic dye is selected from the group consisting of bis(benzoxazolyl)stilbene, perylene bisimide derivatives, cyano substituted oligomers of (p- phenylene-vinylene)s.

In a preferred embodiment of the method as defined above, the color change equates to a $\Delta E_{Lab}$ of at least 2.

Benefits of this concept when applied to manual pallet wrapping include improving overall quality of wrapping and load security, quality control, and to investigate tampering.

Brief Description of the Drawings

The patent or application file contains at least one drawing executed in color. Copies of this patent or patent application publication with color drawing(s) will be provided by the Office upon request and payment of the necessary fee.

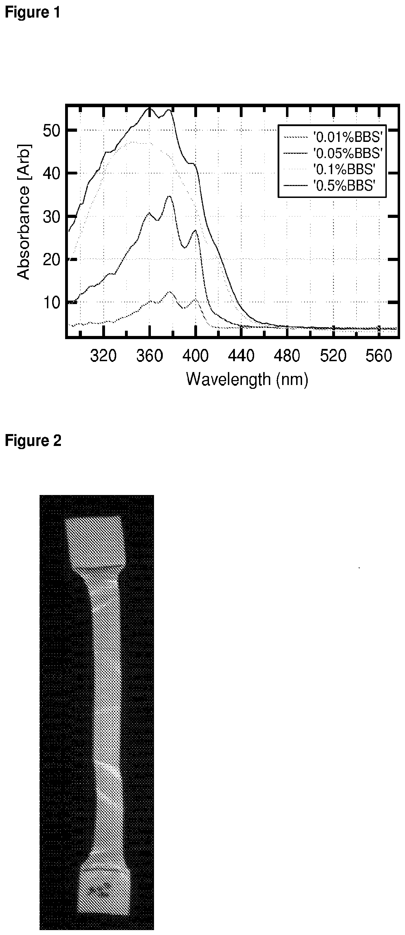

Figure 1 shows the absorbance spectra of polyethylene film with various levels of 4,4'-bis(2-benzoxazolyl)stilbene. Figure 2 is a photograph of a polyethylene films strips containing 0.5% 4,4'-bis(2-benzoxazolyl)stilbene, which was elongated to 300% under UV enhanced illumination (i.e.,illuminated under UV and ambient visible light).

DETAILED DESCRIPTION OF THE INVENTION

The term "polymer", as used herein, refers to a polymeric compound prepared by polymerizing monomers, whether of the same or a different type. The generic term polymer thus embraces the term "homopolymer", usually employed to refer to polymers prepared from only one type of monomer as well as "copolymer" which in the present disclosure refers to polymers prepared from two or more different monomers (i.e., for purposes of the present invention the term "copolymers" is used to generically mean polymers made from at least two different monomers and therefore includes what those skilled in the art might refer to as "terpolymers" as well as polymers made with more than three different monomers) .

"Polyolefin" shall mean polymers comprising greater than 50% by weight of units which have been derived from alpha-olefins, and in particular alpha olefins having from 2-8 carbon atoms, including polyethylene and polypropylene.

"Polyethylene" shall mean polymers comprising greater than 50% by weight of units which have been derived from ethylene monomer. This includes polyethylene homopolymers or copolymers (meaning units derived from two or more comonomers). Common forms of polyethylene known in the art include Low Density Polyethylene (LDPE); Linear Low Density Polyethylene (LLDPE); Ultra Low Density Polyethylene (ULDPE); Very Low Density Polyethylene (VLDPE); single site catalyzed Linear Low Density Polyethylene, including both linear and substantially linear low density resins (m-LLDPE); Medium Density Polyethylene (MDPE) and High Density Polyethylene (HDPE). Molecular weight of the polymer, which can be expressed as average values (Mn, Mw, Mz where Mn is number average molecular weight, Mw is weight average molecular weight and Mz is Z average molecular weight), is correlated to the polymers melt index as determined according to ASTM D 1238 (2.16kg, 190°C).

These polyethylene materials are generally known in the art; however the following descriptions may be helpful in understanding the differences between some of these different polyethylene resins.

The term "LDPE" may also be referred to as "high pressure ethylene polymer" or "highly branched polyethylene" and is defined to mean that the polymer is partly or entirely homopolymerized or copolymerized in autoclave or tubular reactors at pressures above 14,500 psi (100 MPa) with the use of free-radical initiators, such as peroxides (see for example US 4,599,392). LDPE resins typically have a density in the range of 0.916 to 0.940 g/cm$^3$.

The term "LLDPE" or "Linear Low Density Polyethylene", includes both resin made using the traditional Ziegler-Natta catalyst systems as well as single-site catalysts such as metallocenes (sometimes referred to as "m-LLDPE"). LLDPEs contain less long chain branching than LDPEs and includes the substantially linear ethylene polymers which are further defined in U.S. Patent 5,272,236, U.S. Patent 5,278,272, U.S. Patent 5,582,923 and US Patent 5,733,155; the homogeneously branched linear ethylene polymer compositions such as those in U.S. Patent No. 3,645,992; the heterogeneously branched ethylene polymers such as those prepared according to the process disclosed in U.S. Patent No. 4,076,698; and/or blends thereof (such as those disclosed in US 3,914,342 or US 5,854,045). The Linear PE can be made via gas-phase, solution-phase or slurry polymerization or any combination thereof, using any type of reactor or reactor configuration known in the art, with gas and solution phase reactors being most preferred..

The term "HDPE" or High Density Polyethylene is sometimes used to refer to polyethylenes having densities greater than about 0.940 g/cm$^3$, which are generally prepared with Ziegler-Natta catalysts, chrome catalysts or even metallocene catalysts. Similarly "MDPE" or Medium Density Polyethylene is sometimes used to refer to the subset of polyethylenes which have a density in the range of from about 0.926 to about 0.940 g/cm$^3$). The following analytical methods are used in the present invention:

Density is determined in accordance with ASTM D-792.

"Melt index" also referred to as "$I_2$" (or "MFR" for polypropylene resins) is determined according to ASTM D-1238 (for polyethylene resins 190°C, 2.16 kg; for polypropylene resins 230°C, 2.16kg).

In one aspect of the present disclosure, a multilayer stretch film is provided. The multilayer stretch film comprises at least a first layer, wherein said first layer comprises a polyolefin resin. The film of this aspect of the disclosure further include at least a second layer, and a mechanochromic dye which may be in any or all layers of the film.

First Layer

Any polyolefin resin generally known in the art as being suitable for use in stretch film applications may be used in the first layer of the present disclosure. The polyolefin resin preferably is comprised of greater than 70%, 80% or even 90% by weight of units which have been derived from alpha-olefins, and in particular alpha olefins having from 2-8 carbon atoms. Preferred polyolefins for use in the present disclosure include polyethylene, including LDPE, LLDPE, MDPE, and HDPE and polypropylene, including homopolymer polypropylene (h-PP), random copolymer polypropylene (RPP) and impact copolymer polypropylene (ICP).

In some embodiments the polyolefin comprises a linear low density polyethylene (LLDPE). The LLDPE suitable for stretch film application may advantageously have a density in the range of from 0.900 to 0.930 g/cm3. All individual values and subranges from 0.900 to 0.930 g/cm3 are included herein and disclosed herein; for example, the density can be from a lower limit of 0.900, 0.905, 0.908, 0.910, or 0.914 $g/cm^3$ to an upper limit of 0.919, 0.920, 0.925, or 0.930 $g/cm^3$.

The linear low density polyethylene compositions useful in the instant disclosure may advantageously have a melt index ($I_2$) in the range of from 0.3 to 10.0 g/10 minutes. All individual values and subranges from 0.3 to 10 g/10 minutes are included herein and disclosed herein; for example, the melt index ($I_2$) can be from a lower limit of 0.3, 0.6, 0.7, 1.0, 1.5, 2.0, 3.0 g/10 minutes to an upper limit of 4.0, 5.0, 8.0, 10.0 g /10 minutes.

The linear low density polyethylene compositions useful in the instant disclosure may comprise less than 35 percent by weight of units derived from one or more $\alpha$-olefin comonomers other than ethylene. All individual values and subranges from less than 35 weight percent are included herein and disclosed herein; for example, the linear low density polyethylene composition may comprise less than 25 percent by weight of units derived from one or more $\alpha$-olefin comonomers; or in the alternative, the linear low density polyethylene composition may comprise less than 15 percent by weight of units derived from one or more $\alpha$-olefin comonomers; or in the alternative, the linear low density polyethylene composition may comprise less than 14 percent by weight of units derived from one or more $\alpha$-olefin comonomers.

The $\alpha$-olefin comonomers typically used in LLDPE's suitable for use in the present disclosure typically have no more than 20 carbon atoms. For example, the $\alpha$-olefin comonomers may preferably have 3 to 10 carbon atoms, and more preferably 3 to 8 carbon atoms. Exemplary $\alpha$-olefin comonomers include, but are not limited to, propylene, 1-butene, 1-pentene, 1-hexene, 1-heptene, 1-octene, 1-nonene, 1-decene, and 4-methyl-1-pentene. The one or more $\alpha$-olefin comonomers may, for example, be selected from the group consisting of propylene, 1-butene, 1-hexene, and 1-octene; or in the alternative, from the group consisting of 1-hexene and 1-octene.

The linear low density polyethylene composition suitable for use in the present disclosure may comprise at least 65 percent by weight of units derived from ethylene. All individual values and subranges from at least 75 weight percent are included herein and disclosed herein; for example, the linear low density polyethylene composition may comprise at least 85 percent by weight of units derived from ethylene; or in the alternative, the linear low density polyethylene composition may comprise less than 100 percent by weight of units derived from ethylene.

Any conventional ethylene (co)polymerization reaction may be employed to produce such linear low density polyethylene compositions. Such conventional ethylene (co)polymerization reactions include, but are not limited to, gas phase polymerization process, slurry phase polymerization process, solution phase polymerization process, and combinations thereof using one or more conventional reactors, e.g. fluidized bed gas phase reactors, loop reactors, stirred tank reactors, batch reactors in parallel, series, and/or any combinations thereof. For example, the linear low density polyethylene composition may be produced via gas phase polymerization process in a single gas phase reactor; however, the production of such linear low density polyethylene compositions is not so limited to gas phase polymerization process, and any of the above polymerization processes may be employed. In one embodiment, the polymerization reactor may comprise of two or more reactors in series, parallel, or combinations thereof. Preferably, the polymerization reactor is one reactor, e.g. a fluidized bed gas phase reactor. In another embodiment, the gas phase polymerization reactor is a continuous polymerization reactor comprising one or more feed streams. In the polymerization reactor, the one or more feed streams are combined together, and the gas comprising ethylene and optionally one or more comonomers, e.g. one or more $\alpha$-olefins, are flowed or cycled continuously through the polymerization reactor by any suitable means. The gas comprising ethylene and optionally one or more comonomers, e.g. one or more $\alpha$-olefins, may be fed up through a distributor plate to fluidize the bed in a continuous fluidization process.

Suitable LLDPE polymers for use in the present disclosure include those commercially available from The Dow Chemical Company (for example, DOWLEX™, DOWLEX GM™, ELITE™, ELITE AT™, INNATE™, ATTANE™ and AFFINITY™ resins).

In addition to LLDPE, other polyethylenes suitable for use in the present disclosure include low density polyethylene(s) (LDPE), particularly when blended with LLDPE. Such blends may comprise from less than 30 percent by weight of one or more low density polyethylene(s) (LDPE); for example, from 2 to 25 weight percent; or in the alternative, from 5 to 15 weight percent. The low density polyethylene preferably has a density in the range of from 0.915 to 0.930 g/cm$^3$; for example, from 0.915 to 0.925 g/cm$^3$; or in the alternative, from 0.918 to 0.922 g/cm$^3$. The low density polyethylene preferably has a melt index (I2) in the range of from 0.1 to 5 g/10 minutes; for example, from 0.5 to 3 g/10 minutes; or in the alternative, from 1.5 to 2.5 g/10 minutes. The low density polyethylene preferably has a molecular weight distribution (Mw/Mn) in the range of from 6 to 10; for example, from 6 to 9.5; or in the alternative, from 6 to 9; or in the alternative, from 6 to 8.5; or in the alternative, from 7.5 to 9.

If LDPE is present as a blend with LLDPE, the blend composition may be prepared via any conventional melt blending process such as extrusion via an extruder, e.g. single or twin screw extruder. The LDPE, LLDPE, and optionally one or more additives may be melt blended in any order via one or more extruders to form a uniform blend composition. In the alternative, the LDPE, LLDPE, and optionally one or more additives may be dry blended in any order, and subsequently extruded to form a stretch film.

Polyolefin polymers other than polyethylenes can also be advantageously used in the present invention, and in particular polypropylene polymers and olefin block copolymers (OBCs) may be used. Propylene polymers include polypropylene homopolymer and copolymers, including random and impact copolymers, such as propylene/ethylene copolymers and are particularly well suited for use in the present invention. Propylene polymers having a 2 percent secant modulus, as measured by ASTM D 882, of about 150,000 psi and less are preferred. Propylene polymers also include the family of resins know as propylene based plastomers and elastomers (PBPE) which family includes those commercially available from ExxonMobil (VISTAMAXX™) and The Dow Chemical Company (for example, VERSIFY™).

Olefin block copolymers are a relatively new class of block copolymers. The term "block copolymer" or "segmented copolymer" refers to a polymer comprising two or more chemically distinct regions or segments (referred to as "blocks") joined in a linear manner, that is, a polymer comprising chemically differentiated units which are joined (covalently bonded) end-to-end with respect to polymerized functionality, rather than in pendent or grafted fashion. Olefin block copolymers involve block copolymers made from olefins. The blocks differ in the amount or type of comonomer incorporated therein, the density, the amount of crystallinity, the type of crystallinity (e.g., polyethylene versus polypropylene), the crystallite size attributable to a polymer of such composition, the type or degree of tacticity (isotactic or syndiotactic), regio-regularity or regio-irregularity, the amount of branching, including long chain branching or hyper-branching, the homogeneity, and/or any other chemical or physical property. The block copolymers are characterized by unique distributions of both polymer polydispersity (PDI or Mw/Mn) and block length distribution, e.g., based on the effect of the use of a shuttling agent(s) in combination with catalysts. Olefin block polymers include those with ethylene as the dominant comonomer as well as those with propylene as the dominant monomer. Such materials are commercially available from The Dow Chemical Company under the INFUSE™ and INTUNE™ trade names.

Other resins known for use in stretch film applications may also be used with polyolefins in the first layer of the present invention, including ethylene vinyl acetate copolymers ("EVA"), ethylene ethyl acrylate copolymers ("EEA"), ethylene acrylic acid copolymers ("EAA"), ethylene methy acrylate copolymers ("EMA") and ethylene n-butyl acrylate copolymers ("EnBA").

Additional Layer(s)

In addition to the first layer comprising a polyolefin resin described above, the stretch films of the present disclosure also comprise one or more additional layers. The additional layers, if any, should be chosen so as not to unduly interfere with the stretchable nature of the stretch films.

These additional layers may advantageously be used to impart additional functionality to the film. For example, additional layers may be added to provide cling, barrier properties or additional physical properties such as puncture resistance, tear resistance or abuse resistance may be used in the present invention. These layers may comprise one or more different polymers as is generally known in the art. These include polyolefins which may be of the same types as described for the first layer so long as in any specific film it is a different composition than that which is used in the first layer (i.e., the layers must be distinguishable, such as by using optical microscopy or other methods known in the art). Other materials for these additional layers can be, for example, polyamides (nylon), ethylene-vinyl alcohol copolymers, polyvinylidene chloride, polyesters and their copolymers such as polyethylene terephthalate, ethylene-vinyl acetate copolymers, ethylene-acrylic acid copolymers, ethylene-methacrylic acid copolymers, graft modified polymers, styrenic block copolymers In some multilayer structures where a desired layer is not completely compatible with the first layer, an adhesion-promoting tie layer, such as PRIMACOR™ ethylene-acrylic acid copolymers available from The Dow Chemical Co., and/or ethylene-vinyl acetate copolymers may be desirable..

In a preferred embodiment, 2 or more layers comprise a polyolefin resin.

Mechanochromic Dye

Stretch films of the present disclosure further include one or more mechanochromic dyes. The optical properties of mechanochromic dyes are controlled by their molecular arrangement or aggregation in a particular media (solid state, solvent, or film). Mechanical stimuli, such as tension, compression or ultrasonic stimuli, can alter this molecular assembly thereby directly modulating the optical properties.

These optical property changes may result from either a chemical change within the dye (e.g. scission of chemical bonds) or a physical change in the dye assembly (e.g. changes in molecular packing of dye molecules). Of particular interest in the present disclosure are mechanochromic dyes which exhibit the property of aggregation induced emission ("AIE").

In this disclosure, the dyes are incorporated into the stretch film matrix and the aggregation level of the dye in the film is "tuned" by the dye concentration. When the film is stretched, the aggregation (i.e. concentration) of the dye changes, leading to a change in the color of the film. By optimizing the selection of the dye as well as the dye concentrations, the color changes can be correlated to the amount of stretch desired for intended applications, such as pallet wrapping. Furthermore, the optimized dye concentrations are generally fairly low, allowing the stretch film to maintain their visual transparency. This is particularly true when mechanochromic dyes are used that show minimal change under natural light. Films incorporating such dyes may be exposed to an external light source such as a UV light to enhance the color change. It is also contemplated that the films may be exposed to multiple light sources such as natual light in addition to a UV light source.

Any mechanochromic AIE dye known in the art may be used in the present disclosure. Examples of mechanochromic dyes which may be used in the present disclosure include bis(benzoxazolyl)stilbene, perylene bisimide derivatives, cyano substituted oligomers of (p- phenylene-vinylene)s, etc. Although not intending to be bound by theory, in general when choosing a mechanochromic dye, the following relationship should be considered: the less likely a dye is to aggregate, the better chance it has as existing as single isolated molecules and therefore, the greater the differentiation in its optical properties between the aggregated and single molecular state at typical dye concentrations. As molecules with more and bulkier side groups tend to disrupt molecular packing (making them less likely to aggregate), these types of dyes tend to be preferred for use as a color changing dye. For example, 3,4,9,10-perylenetetracarbxylic diimide (PTCDI) is less preferred than perylene-3,4,9,10 tetracarboxylic acid bis(propylimide (PTCDI-T) which is less preferred than N,N''-Bis(3-pentyl)perylene-3,4,9,10-bis(dicarbooximide) (PTCDI-3P), three similar perylene bisimide derivatives differing by end groups, and therfore their tendency for molecular aggregation.

Further it may be desirable to use multiple dye types (both mechanochromic and non-mechanochromic) in order to generate the desired color effect.

The concentration of the dye should be high enough to promote at least one aggregated phase that has a different optical property than the dilute phase. The optimum concentration can be tuned to the ideal film elongation, thereby producing color change during stretching at the desired level (i.e. the dye aggregation should be broken up by the mechanical stimulus of elongation at the desired level). The specific concentration used therefore, will depend on a combination of factors including the particular dye used, the matrix of the film in which the dye is incorporated, and the desired level of elongation of the film during use. Typical concentration of the mechanochromic dyes are in the range of from at least 0.0001, 0.001, or 0.01 up to 1, 0.5, or 0.1 percent by weight of the film layer containing the dye, with at least about 0.0001 percent dye by weight of the overall film.

The mechanochromic dye may be incorporated in any layer of the film. As each layers has a different crystalline structure, and each layer responds differently to elongation, the persons of ordinary skill in the art will understand that certain layers may be more desirable than others to allow for the aggregation of the mechanochromic AIE dyes to be disrupted upon the desired level of elongation. For the dye to be visible (either under natural light or using an external source such as an ultra violet light), the dyes should be incorporated in layer which is not opaque or which is not encapsulated by any opaque layers. In many applications, the mechanochromic dye will be incorporated into the first layer comprising a polyolefin resin, of the stretch films of the present disclosure.

In a preferred embodiment the mechanochromic dye is dispersed within the first layer.

In a preferred embodiment the mechanochromic dye is dispersed within the second layer.

In a preferred embodiment the mechanochromic dye is dispersed in both the first layer and the second layer.

Overall Film Structure

The film structures of the present disclosure may comprise any number of layers desired. Films having two, three, five, seven, nine layers or more are known in the art and can be used in the present disclosure. It is also contemplated that some of the layers may be microlayers.

The thickness of each layer of the film, and of the overall film, is not particularly limited, but is determined according to the desired properties of the film. Typical film layers have a non-preoriented thickness of from 5 to 200 $\mu$m,

more typically from 8 to 100 or even 25 μm (and of course these can be even smaller when microlayer technology is used), and typical films have an overall thickness (non-preoriented) of from 5 to 300 μm, more typically 10 to 100 μm..

The layers of the stretch films useful for the present invention may further comprise additional additives. Such additives include, but are not limited to, one or more hydrotalcite based neutralizing agents, antistatic agents, color enhancers, additional dyes or pigments (so long as such additional dyes are pigments do not prevent the color change from being observed), lubricants, fillers, pigments, primary antioxidants, secondary antioxidants, processing aids, UV stabilizers, nucleators, and combinations thereof. The inventive polyethylene composition may contain any amounts of additives. The linear low density polyethylene composition may comprise from about 0 to about 10 percent by the combined weight of such additives, based on the weight of the linear low density polyethylene composition including such additives. All individual values and subranges from about 0 to about 10 weight percent are included herein and disclosed herein; for example, the linear low density polyethylene composition may comprise from 0 to 7 percent by the combined weight of additives, based on the weight of the linear low density polyethylene composition including such additives; in the alternative, the linear low density polyethylene composition may comprise from 0 to 5 percent by the combined weight of additives, based on the weight of the linear low density polyethylene composition including such additives; or in the alternative, the linear low density polyethylene composition may comprise from 0 to 3 percent by the combined weight of additives, based on the weight of the linear low density polyethylene composition including such additives; or in the alternative, the linear low density polyethylene composition may comprise from 0 to 2 percent by the combined weight of additives, based on the weight of the linear low density polyethylene composition including such additives; or in the alternative, the linear low density polyethylene composition may comprise from 0 to 1 percent by the combined weight of additives, based on the weight of the linear low density polyethylene composition including such additives; or in the alternative, the linear low density polyethylene composition may comprise from 0 to 0.5 percent by the combined weight of additives, based on the weight of the linear low density polyethylene composition including such additives.

The film structures of the present disclosure may be made by conventional fabrication techniques, for example simple blown film (bubble) extrusion, biaxial orientation processes (such as tenter frames or double bubble processes), simple cast/sheet extrusion, coextrusion, lamination. Conventional simple bubble extrusion processes (also known as hot blown film processes) are described, for example, in The Encyclopedia of Chemical Technology, Kirk-Othmer, Third Edition, John Wiley & Sons, New York, 1981, Vol. 16, pp. 416-417 and Vol. 18, pp. 191-192. Biaxial orientation film manufacturing processes such as described in the "double bubble" process of U.S.-A-Patent No. 3,456,044 (Pahlke), and the processes described in U.S.-A-Patent No. 4,352,849 (Mueller), U.S.-A-Patent Nos. 4,820,557 and 4,837,084 (both to Warren), U.S.-A-Patent No. 4,865,902 (Golike et al.), U.S.-A-Patent No. 4,927,708 (Herran et al.), U.S.-A-Patent No. 4.952,451 (Mueller), and U.S.-A-Patent Nos. 4,963,419 and 5,059,481 (both to Lustig et al.), can also be used to make the film structures of this invention.

The stretch films of the present invention should be suitable for use in stretch film applications. Thus the films of the present invention should have adequate physical properties such as Ultimate Tensile (ASTM D882), Elongation % (ASTM D882), Tear Resistance (ASTM D1922), Dart Drop (ASTMD1709), and pre-stretch elongation at break (Highlight method). While such values will vary depending on intended use and thickness of the films, for a film 20 micron film (0.8 mil), it is preferred that the stretch film have an Ultimate Tensile in the machine direction ("MD") of at least 6000 psi, and in the cross direction ("CD") of at least 4500 psi. Similarly, it is preferred that such film has an elongation in the MD of at least 300%, and in the CD of at least 400% (prior to any pre-orientation). Tear Resistance can be greater than about 75 grams in the MD and 250 grams in the CD. Such film also preferably has a dart drop pf greater than 50 grams, and a pre-stretch elongation at break of at least 250%.

The stretch films of the present invention can be characterized by their color (as well as the color change during use). Of key importance to the present invention is the qualitative ability to observe a change in color. Color can be quantified using Absorption/Emission Spectroscopy or a colorimeter. Absorption or emission spectroscopy can be used with the appropriate light or excitation source and spectrophotometer. Quantifiable color data may be obtained via analysis of intensity per given wavelength and/or by analysis of curve shape, with the appropriate baseline subtraction, as is generally known in the art. Typical spectral analysis range may be 250-800 nm.

Color of film may be measured by ASTM E1 164-12e1, "Standard Practice for Obtaining Spectrometric Data for Object-Color Evaluation. As described in the methodology description, the fundamental procedure for evaluating the color of a reflecting or transmitting object is to obtain spectrometric data for specified illuminating and viewing conditions, and from these data to compute tristimulus values based on a CIE (International Commission on Illumination) standard observer and a CIE standard illuminant. For example, a standard Illuminant D65 can be used to represent average daylight including the UV wavelength region. Other standard illuminants may be used to represent other color temperatures such as F11 fluorescent.

CIE L*a*b* (CIELAB) is a color space specified by the International Commission on Illumination in 1976 produced from tristimulus values X,Y,Z. In this space, every color is described by three components: L* - lightness, where 0 means black, and 100 is the maximum light intensity which is still visible without causing eye damage; a* - color in the greens ÷

red field (-128,+127), b* - color in the blue ÷ yellow field (-128, +127). In the middle (a* = 0, b* = 0) only gray values exist. In this space, all the colors that are visible and distinguishable for the human eyes can be represented.

Differences between two color values in this CIELAB color space may be calculated by formulas (see W.Mokrzycki and M. Tatol, ResearchGate.net publication 236023905) such as

$$\Delta E_{Lab} = SQRT [(\Delta L*)^2 + (\Delta a*)^2 + (\Delta b*)^{2]}$$

where values of $\Delta E$ of >5 or >3 or even >2 have been correlated to perceptible color difference experimentally (see ref). It is preferred that the color change observed during wrapping at the desired level of elongation be perceptible, and thus have a $\Delta E_{Lab}$ of at least 2, preferably 3, and more preferably 5.

In use, the stretch films of the present disclosure can be used to facilitate proper amount of stretching when using the films to wrap by hand. To achieve this, a polyolefin resin suitable for stretch films is first selected, such film having a given density and other physical parameters. Then a mechanochromic dye capable of agglomeration in an unstretched film made from the polyolefin resin is selected. The mechanochromic dye is then combined with the polyolefin resin, by admixing or other means. A film is then made which includes at least one layer comprising the polyolefin films with the mechanochromic dye. The film may be mono-layer but is preferably a multi-layer film, where the additional layers provide additional properties as is generally known in the art. Such film will exhibit a first color when exposed to certain lighting (for example natural lighting, fluorescent lighting, and/or under a UV light). The user then wraps an object using the film, ensuring that the film is stretched to a point where a color change in the film is observed under the given lighting. By tailoring the dye and the matrix which contains the dye, the color change can be adjusted to happen at different levels of elongation. Thus, the film producer can determine the optimum level of elongation of the film for use in particular applications, and tailor the dye package so that the color change is observed in the desired range of elongation and under the desired lighting conditions.

EXAMPLES

**Example 1** (not according to the invention)

In order to demonstrate the basic concept of the present disclosure a series of mono layer films are made using an ethylene-octene linear low density resin having a density of 0.920 g/cm3 and a melt index (190°C, 2.16 kg) of 1.0 g/10min. A mechanochromic AIG dye, 4,4'-bis(2-benzoxazolyl)stilbene ("BBS") is compounded into the resin at different concentrations using a Micro 18 Twin Screw Extruder. The compounded resin is then used to make film having a thickness of 25to 30 microns using a Killion blown film line.

Figure 1 shows the absorbance spectra of PE containing various levels of BBS. As seen, there is a change in the peak structure with the increasing dye concentrations. At high dye concentrations, there is a pronounced absorption shoulder between ∼ 410 - 460 nm, which is diminished at lower dye concentrations. Additionally, at lower BBS concentrations, peaks are well defined (with low full-width-half-maximums), while at higher concentrations, the peaks lose their fine structure. These changes seen in the absorption spectra correspond to a transition from single molecules to molecular aggregates, with increasing dye concentration.

Film strips as made above can then be elongated to different extents and illuminated by UV-enhanced light (ambient light is not excluded). The color of the films will depend on the amount of dye. At certain dye concentration, the films appear green prior to stretching and then exhibit a transition to light blue when elongated. For example, Figure 2 is a photograph under UV light of a PE film strip having an initial concentration of 0.5% BBS which has been stretched to 300%. The tabs which were used to hold the film during stretching (and which therefore were not stretched) appear green whereas the stretched portion appears blue. Other initial levels of dye result in a color change from blue to indigo. The color transition can be presented qualitatively in a table such as Table 1:

Table 1 color mapping of film with various concentrations of BBS at various levels of elongation

|        | 0%     | 50%    | 100%   | 200%   | 300%   | 500%   |
|--------|--------|--------|--------|--------|--------|--------|
| 0.5%   | green  | green  | green  | blue   | blue   | blue   |
| 0.1%   | green  | green  | green  | blue   | blue   | blue   |
| 0.05%  | green  | green  | green  | blue   | blue   | blue   |
| 0.01%  | blue   | blue   | blue   | blue   | indigo | indigo |
| 0.001 %| indigo | indigo | indigo | indigo | indigo | indigo |

As seen in this table if a color change is desired to happen at an elongation of between 200 - 300%, a target initial dye concentration of 0.01 wt. % may be beneficial. Alternatively, if a color transition at 100 -200% elongation is desired, a target initial dye concentration of 0.1 wt. % can be beneficially used.

**Example 2**

In order to demonstrate the basic concept of the present disclosure in a multilayer film, a series of co-ex structures were made using an ethylene-octene linear low density resin having a density of 0.920 g/cm3 and a melt index (190°C, 2.16 kg) of 1.0 g/10min. A mechanochromic AIG dye, 4,4'-bis(2-benzoxazolyl)stilbene ("BBS") is compounded into the resin to form a 1wt% master batch film using a LabTech Twin Screw Extruder. The compounded resin is then used to make film having a thickness of ~ 25 micron (1 mil) using a LabTech co-ex blown film line. Table 1 and 2 describes the resins and the composition of the films produced with the resins. The films produced represent a typical structure of a multilayer stretch film. Film 1 is the control having no dye present, Film 2 has the dye in Layer 2 only, and Film 3 has the dye in all the layers. The total amount of the BBS dye in the structure in Film 2 and Film 3 are 0.24 wt% and 0.3 wt% respectively.

**Table 1: Resin description**

| Resins | Density (g/cc) | MI (g/10min) |
|---|---|---|
| Resin 1 (LLDPE) | 0.920 | 1.0 |
| Resin 2 (LDPE) | 0.921 | 1.9 |
| Resin 3 (LLDPE) | 0.870 | 1.0 |

**Table 2: Film description**

| Films | Layer 1 (5 micron, 0.2 mil) | Layer 2 (15 micron, 0.6 mil) | Layer 3 (5 micron, 0.2 mil) |
|---|---|---|---|
| Film 1 | 90 wt% Resin 1 + 10 wt% Resin 2 | Resin 1 | Resin3 |
| Film 2 | 90 wt% Resin 1 + 10 wt% Resin 2 | 99.6wt% Resin 1 + 0.4 wt% BBS | Resin3 |
| Film 3 | 89.7 wt% Resin 1 + 10 wt% Resin 2 + 0.3 wt% BBS | 99.7wt % Resin 1 + 0.3 wt% BBS | 99.7 wt% Resin 3 + 0.3 wt% BBS |

Strips from the above films are made and can then be elongated to different extents and illuminated by UV-enhanced light (ambient light is not excluded). The color transition of each film can be presented qualitatively in a table such as Table 3:

**Table 3: Color transitions of the various films**

| Samples | 0% Elongation | 100% Elongation | 200% Elongation | 300% Elongation |
|---|---|---|---|---|
| Film 1 | none | none | none | none |
| Film 2 | green | green | blue | blue |
| Film 3 | green | green | blue | blue |

There are subtle differences between Film 2 and Film 3 due to the differences in dye composition in the film layers. Film 2 has a brighter green shade compared to Film 3 when both films are not stretched, and at 200% elongation, the blue transition of Film 2 is weaker than Film 3. This unexpected observation is seen despite Film 2 having a lower overall dye concentration than Film 3. This indicates the ability to tune optical film properties via modification of dye composition among the film layers.

## Claims

1. A multilayer stretch film comprising:

   a. at least a first layer, wherein said first layer comprises a polyolefin resin;
   b. at least a second layer, wherein the second layer comprises one or more different polymers; and
   c. a mechanochromic dye in an amount of from 0.0001 to 1 percent by weight of the multilayer stretch film, wherein the mechanochromic dye is in any or all layers of the film;

   wherein the multilayer stretch film has an elongation in the machine direction of at least 300%, as determined by ASTM D882, and an elongation in the cross direction of at least 400%, as determined by ASTM D882, prior to any pre-orientation;
   and wherein the first layer and the second layer each have a non-preoriented thickness in the range of from 5 to 200 $\mu$m.

2. The multilayer stretch film of claim 1 wherein the mechanochromic dye is dispersed within the first layer.

3. The multilayer stretch film of claim 1 wherein the mechanochromic dye is dispersed within the second layer.

4. The multilayer stretch film of claim 3 wherein the mechanochromic dye is dispersed in both the first layer and the second layer.

5. The multilayer stretch film of claim 1 wherein the polyolefin resin is selected from the group consisting of LLDPE (including mLLDPE, znLLDPE), LDPE, HDPE, MDPE, PP (including RCP, hPP, PBPE and ICP), OBCs and combinations thereof.

6. The multilayer stretch film of claim 1 wherein 2 or more layers comprise a polyolefin resin.

7. The multilayer stretch film of claim 1 wherein the mechanochromic dye is selected from the group consisting of bis(benzoxazolyl)stilbene, perylene bisimide derivatives, cyano substituted oligomers of (p- phenylene-vinylene)s.

8. The multilayer stretch film of claim 1 further comprising one or more additional dyes, which may be mechanochromic or non-mechanochromic.

9. The multilayer stretch film of claim 1 wherein the dye is present in an amount of from 0.01 to 0.1 percent by weight of the multilayer stretch film.

10. The multilayer stretch film of claim 1 **characterized in that** the mechanochromic dye experiences a color change when the film is stretched over a range of desired elongation; wherein said color change is observed either under natural light or using an external source such as an ultraviolet light and is quantified using Absorption/Emission Spectroscopy or a colorimeter.

## Patentansprüche

1. Eine mehrschichtige Dehnfolie, beinhaltend:

   a. mindestens eine erste Schicht, wobei die erste Schicht ein Polyolefinharz beinhaltet;
   b. mindestens eine zweite Schicht, wobei die zweite Schicht ein oder mehrere unterschiedliche Polymere beinhaltet; und
   c. einen mechanochromen Farbstoff in einer Menge von 0,0001 bis 1 Gewichtsprozent der mehrschichtigen Dehnfolie, wobei der mechanochrome Farbstoff in einer beliebigen oder allen Schichten der Folie vorkommt;

   wobei die mehrschichtige Dehnfolie vor einer beliebigen Vororientierung in der Längsrichtung eine Ausdehnung von mindestens 300 %, wie durch ASTM D882 bestimmt, und in der Querrichtung eine Ausdehnung von mindestens 400 %, wie durch ASTM D882 bestimmt, aufweist;
   und wobei die erste Schicht und die zweite Schicht jeweils eine nicht vororientierte Dicke im Bereich von 5 bis 200 $\mu$m aufweisen.

**2.** Mehrschichtige Dehnfolie gemäß Anspruch 1, wobei der mechanochrome Farbstoff innerhalb der ersten Schicht dispergiert ist.

**3.** Mehrschichtige Dehnfolie gemäß Anspruch 1, wobei der mechanochrome Farbstoff innerhalb der zweiten Schicht dispergiert ist.

**4.** Mehrschichtige Dehnfolie gemäß Anspruch 3, wobei der mechanochrome Farbstoff sowohl in der ersten Schicht als auch der zweiten Schicht dispergiert ist.

**5.** Mehrschichtige Dehnfolie gemäß Anspruch 1, wobei das Polyolefinharz aus der Gruppe ausgewählt ist, die aus LLDPE (einschließlich mLLDPE, znLLDPE), LDPE, HDPE, MDPE, PP (einschließlich RCP, hPP, PBPE und ICP), OBCs und Kombinationen davon besteht.

**6.** Mehrschichtige Dehnfolie gemäß Anspruch 1, wobei 2 oder mehr Schichten ein Polyolefinharz beinhalten.

**7.** Mehrschichtige Dehnfolie gemäß Anspruch 1, wobei der mechanochrome Farbstoff aus der Gruppe ausgewählt ist, die aus Bis(benzoxazolyl)stilben, Perylenbisimidderivaten, cyanosubstituierten Oligomeren von (p-Phenylen-Vinylenen) besteht.

**8.** Mehrschichtige Dehnfolie gemäß Anspruch 1, ferner beinhaltend einen oder mehrere zusätzliche Farbstoffe, die mechanochrom oder nicht mechanochrom sein können.

**9.** Mehrschichtige Dehnfolie gemäß Anspruch 1, wobei der Farbstoff in einer Menge von 0,01 bis 0,1 Gewichtsprozent der mehrschichtigen Dehnfolie vorhanden ist.

**10.** Mehrschichtige Dehnfolie gemäß Anspruch 1, **dadurch gekennzeichnet, dass** der mechanochrome Farbstoff eine Farbänderung erfährt, wenn die Folie über einen Bereich gewünschter Ausdehnung gedehnt wird; wobei die Farbänderung entweder unter natürlichem Licht oder unter Verwendung einer externen Quelle wie etwa einem Ultraviolettlicht beobachtet wird und unter Verwendung von Absorptions-/Emissionsspektroskopie oder eines Kolorimeters quantifiziert wird.


**Revendications**

**1.** Un film étirable multicouche comprenant :

a. au moins une première couche, ladite première couche comprenant une résine de polyoléfine ;
b. au moins une deuxième couche, la deuxième couche comprenant un ou plusieurs polymères différents ; et
c. un colorant mécanochromique en une quantité allant de 0,0001 à 1 pour cent en poids du film étirable multicouche, le colorant mécanochromique étant dans n'importe quelle couche ou dans toutes les couches du film ;

le film étirable multicouche ayant un allongement dans le sens machine d'au moins 300 %, tel que déterminé par l'ASTM D882, et un allongement dans le sens travers d'au moins 400 %, tel que déterminé par l'ASTM D882, avant toute pré-orientation ;
et dans lequel la première couche et la deuxième couche ont chacune une épaisseur non pré-orientée comprise dans la plage allant de 5 à 200 $\mu$m.

**2.** Le film étirable multicouche de la revendication 1 dans lequel le colorant mécanochromique est dispersé à l'intérieur de la première couche.

**3.** Le film étirable multicouche de la revendication 1 dans lequel le colorant mécanochromique est dispersé à l'intérieur de la deuxième couche.

**4.** Le film étirable multicouche de la revendication 3 dans lequel le colorant mécanochromique est dispersé dans à la fois la première couche et la deuxième couche.

**5.** Le film étirable multicouche de la revendication 1 dans lequel la résine de polyoléfine est sélectionnée dans le groupe constitué de LLDPE (y compris les mLLDPE, les znLLDPE), de LDPE, de HDPE, de MDPE, de PP (y compris les RCP, les hPP, les PBPE et les ICP), de OBC et de combinaisons de ceux-ci.

6. Le film étirable multicouche de la revendication 1 dans lequel 2 couches ou plus comprennent une résine de polyoléfine.

7. Le film étirable multicouche de la revendication 1 dans lequel le colorant mécanochromique est sélectionné dans le groupe constitué de bis(benzoxazolyl)stilbène, de dérivés de pérylène bisimide, d'oligomères de (p-phénylène-vinylène)s substitués par un cyano.

8. Le film étirable multicouche de la revendication 1 comprenant en outre un ou plusieurs colorants supplémentaires, lesquels peuvent être mécanochromiques ou non mécanochromiques.

9. Le film étirable multicouche de la revendication 1 dans lequel le colorant est présent en une quantité allant de 0,01 à 0,1 pour cent en poids du film étirable multicouche.

10. Le film étirable multicouche de la revendication 1 **caractérisé en ce que** le colorant mécanochromique connaît un changement de couleur lorsque le film est étiré sur une plage d'allongement désiré ; dans lequel ledit changement de couleur est observé soit sous la lumière naturelle, soit en utilisant une source externe telle qu'une lumière ultraviolette et est quantifié en utilisant la spectroscopie d'absorption/d'émission ou un colorimètre.

**Figure 1**

**Figure 2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 9414609 A
- US 4599392 A
- US 5272236 A
- US 5278272 A
- US 5582923 A
- US 5733155 A
- US 3645992 A
- US 4076698 A
- US 3914342 A
- US 5854045 A
- US 3456044 A, Pahlke
- US 4352849 A, Mueller
- US 4820557 A
- US 4837084 A, Warren
- US 4865902 A, Golike
- US 4927708 A, Herran
- US 4952451 A, Mueller
- US 4963419 A
- US 5059481 A, Lustig

### Non-patent literature cited in the description

- The Encyclopedia of Chemical Technology, Kirk-Othmer. John Wiley & Sons, 1981, vol. 16, 416-417
- THE ENCYCLOPEDIA OF CHEMICAL TECHNOLOGY, KIRK-OTHMER. vol. 18, 191-192